# EUROPEAN PATENT SPECIFICATION

(11) **EP 1 990 858 B1**
(45) Date of publication and mention of the grant of the patent: **06.10.2010**
(21) Application number: 08008630.9
(22) Date of filing: 07.05.2008
(51) Int. Cl.: H01M 8/04, H01M 8/06

(54) **Fuel cell system**
Brennstoffzellsystem
Système de pile à combustible

(30) Priority: 11.05.2007 JP 2007126555
(43) Date of publication of application: 12.11.2008
(73) Proprietor: Honda Motor Co., Ltd., Minato-ku Tokyo 107-8556 (JP)
(72) Inventor: Sasaki, Takashi, Wako-shi Saitama, 351-0193 (JP); Suzuki, Akihiro, Wako-shi Saitama, 351-0193 (JP); Ukai, Yohtaroh, Wako-shi Saitama, 351-0193 (JP); Oshio, Kiyotaka, Wako-shi Saitama, 351-0193 (JP); Ishii, Yasuo, Wako-shi Saitama, 351-0193 (JP); Numata, Hideo, Wako-shi Saitama, 351-0193 (JP)
(74) Representative: Prechtel, Jörg

(56) References cited:
- EP-A- 1 589 600
- WO-A-2005/024984
- US-A1- 2003 224 231
- US-A1- 2006 040 160

## Description

### BACKGROUND OF THE INVENTION

### Field of the Invention

The present invention relates to a fuel cell system installed in a fuel cell vehicle or the like.

### Description of the Related Art

In a known fuel cell, an anode electrode and a cathode electrode are provided on either side of a solid polymer electrolyte membrane to form a membrane electrode structure, and a pair of separators is arranged on either side of this membrane electrode structure to form a flat unit fuel cell (referred to below as "unit cell"). A plurality of these unit cells are stacked to produce a fuel cell stack (referred to below as a "fuel cell"). In this fuel cell, hydrogen gas is supplied as a fuel gas between the anode electrode and the separator, and air is supplied as an oxidizing gas between the cathode electrode and the separator. Accordingly, the hydrogen ions produced by a catalytic reaction in the anode electrode move through the solid polymer electrolyte membrane to the cathode electrode, and an electrochemical reaction occurs in the cathode electrode between the hydrogen ions and the oxygen in the air, thereby generating electrical power. Accompanying this power generation process, water is also produced inside the fuel cell.

In fuel cells such as those of this solid polymer membrane type, for example in a fuel cell protection system disclosed in Japanese Unexamined Patent Application, First Publication No. H06-223850, a hydrogen gas detector (hydrogen gas concentration sensor) is provided in a residual oxidizing agent discharge line disposed on the cathode electrode side of the fuel cell, and when part of the high polymer ion exchange membrane serving as the electrolyte in the solid polymer electrolyte fuel cell is short of water, leakage of hydrogen gas from the anode electrode side to the cathode electrode side is detected. Then, when the leakage of hydrogen gas is detected, the supply of fuel to the fuel cell is shut off.

An example of a known hydrogen gas concentration sensor is a gas catalytic combustion type hydrogen gas concentration sensor having a detecting element composed of a catalyst such as platinum, and a temperature compensation element. When the catalyst of the detecting element contacts hydrogen gas and undergoes combustion, the temperature of the detecting element rises and its electrical resistivity increases. In contrast, the temperature compensation element does not generate heat on contact with the hydrogen gas and its electrical resistivity does not increase. By using the difference in electrical resistivity between the detecting element and the temperature compensation element, the hydrogen concentration can be detected.

In the fuel cell protection system described above, the highly humid off-gas discharged from the fuel cell may cause condensation to adhere to the hydrogen gas concentration sensor disposed in the off-gas flow line. In this case, such problems as deterioration or failure of the hydrogen gas concentration sensor may occur. Particularly in the solid polymer membrane-type fuel cell described above, because the operating temperature is normally lower than the temperature at which water evaporates, and the off-gas has high humidity, the moisture in the off-gas tends to form condensation.

Furthermore, if the above gas catalytic combustion type hydrogen gas concentration sensor is provided in the flow path of the cathode off-gas, and is repeatedly energized and de-energized with water or the like resulting from humidity or a reaction, adhered to the detecting element, this may lead to corrosion or shorting of the conductors of the elements in the sensor. The adhesion of water may also cause the output to be unstable.

US 2003/224231 A1 shows a fuel cell system in accordance with the preamble of claim 1. There, the discharged gas processing device is formed by the confluence point between two gas lines, and the enlarged cross section area flow path section is formed by an oxidizer. As a specific gas concentration sensor, an oxygen sensor is used.

Accordingly, an object of the present invention is to provide a fuel cell system capable of suppressing the adhesion of condensation to a specific gas concentration sensor. While increase of manufacturing costs are suppressed.

### SUMMARY OF THE INVENTION

In order to solve the above problem, the present invention employs a fuel cell system in accordance with claim 1.
(1) Namely, a fuel cell system of the present invention is provided with: a fuel cell which is supplied with a cathode gas and an anode gas and generates electrical power; a discharged gas processing device which mixes and dilutes a cathode off-gas and an anode off-gas discharged from the fuel cell; a discharge gas pipe through which an exhaust gas discharged from the discharged gas processing device flows; a specific gas concentration sensor disposed in the discharge gas pipe, which measures a concentration of a specific gas in said exhaust gas; and an enlarged cross-section area flow path section provided between said discharged gas processing device and said specific gas concentration sensor, and having a flow path cross-section area that is larger than that of said discharge gas pipe.
   In this fuel cell system, in the enlarged cross-section area flow path section, the area of contact with the exhaust gas increases, causing a drop in temperature. Accordingly, the moisture contained in the exhaust gas forms condensation on the inside wall of the enlarged cross-section area flow path section. As a result, the humidity of the exhaust gas discharged from the enlarged cross-section area flow path section is reduced, and the formation of condensation on the downstream side of the enlarged cross-section area flow path section can be suppressed. As a result, because the specific gas concentration sensor is disposed on the downstream side of the enlarged cross-section area flow path section, the adhesion of condensation to the specific gas concentration sensor can be suppressed.
   The enlarged cross-section area flow path section is a silencer which reduces a sound associated with discharging the exhaust gas.
   In this case, because there is no need to provide an additional device to function as the enlarged cross-section area flow path section, increases to manufacturing costs can be suppressed. Furthermore, the sound associated with discharging the exhaust gas can also be reduced, improving the marketability of the product.
(2) Moreover in this case, the silencer may have a plurality of expansion chambers.
(3) A construction may be employed in which a bend section is formed in the discharge gas pipe, and the specific gas concentration sensor is disposed on an upstream side of the bend section.
   In this case, because the speed of the exhaust gas changes when the exhaust gas hits the bend section, by disposing the specific gas concentration sensor on the upstream side of the bend section, there is more opportunity for the exhaust gas to contact the specific gas concentration sensor. Accordingly, the specific gas can be reliably detected by the specific gas concentration sensor. Furthermore, if a foreign substance infiltrates the discharge gas pipe through the discharge port, the progress of the foreign substance is halted at the bend section, and the foreign substance can be prevented from reaching the specific gas concentration sensor. Accordingly, the specific gas concentration sensor can be effectively protected.
(4)The specific gas concentration sensor may be disposed in an upper part of the discharge gas pipe.
   In this case, because the condensation produced in the discharge gas pipe flows along the lower part of the discharge gas pipe, adhesion of water to the specific gas concentration sensor can be prevented. Furthermore, because the specific gas which has a light specific gravity flows along the upper part of the discharge gas pipe, the specific gas concentration sensor can reliably detect the specific gas.
(5) Moreover, at a bottom of the discharge gas pipe, there may be provided an under cover which exposes only a discharge port of the discharge gas pipe.
(6) Furthermore, the discharged gas processing device may be a diluter.

### BRIEF DESCRIPTION OF THE DRAWINGS

FIG. 1 is a perspective view showing an overview of a fuel cell stack.
FIG. 2 is a development view showing a unit cell.
FIG. 3 is a side cross-sectional view along the line A-A in FIG. 2.
FIG. 4 is a block diagram showing an overview of the structure of a fuel cell system.
FIG. 5A and FIG. 5B are explanatory views showing a hydrogen gas concentration sensor.
FIG. 6A and FIG. 6B are layout drawings showing the same hydrogen gas concentration sensor.

### DETAILED DESCRIPTION OF THE INVENTION

A fuel cell system according to an embodiment of the present invention will be explained below with reference to the drawings.

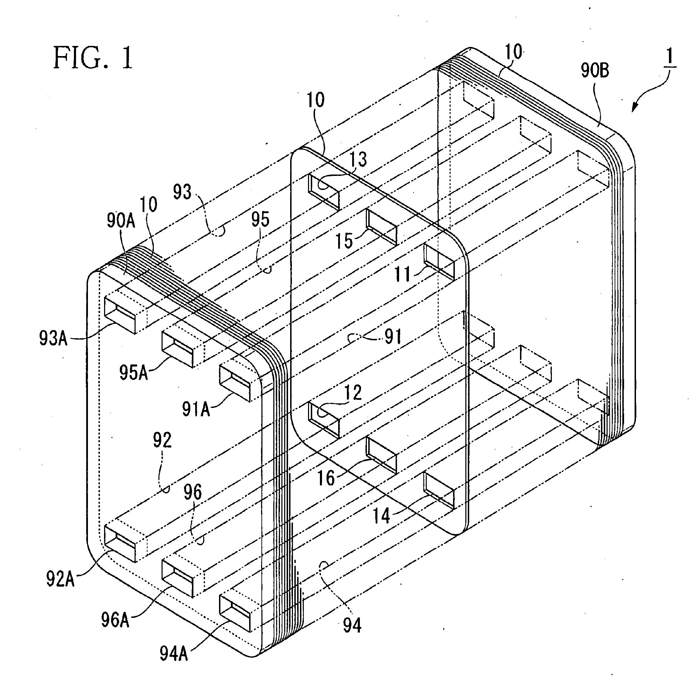

FIG. 1 is a perspective view showing an overview of a fuel cell stack according to the present embodiment. A fuel cell stack 1 is formed in which a large number of unit fuel cells 10 (referred to as "unit cells" below) are stacked and electrically connected in series, end plates 90A and 90B are arranged on either side of the stacked body, and the structure is fastened together using tie rods (not shown in the figure).

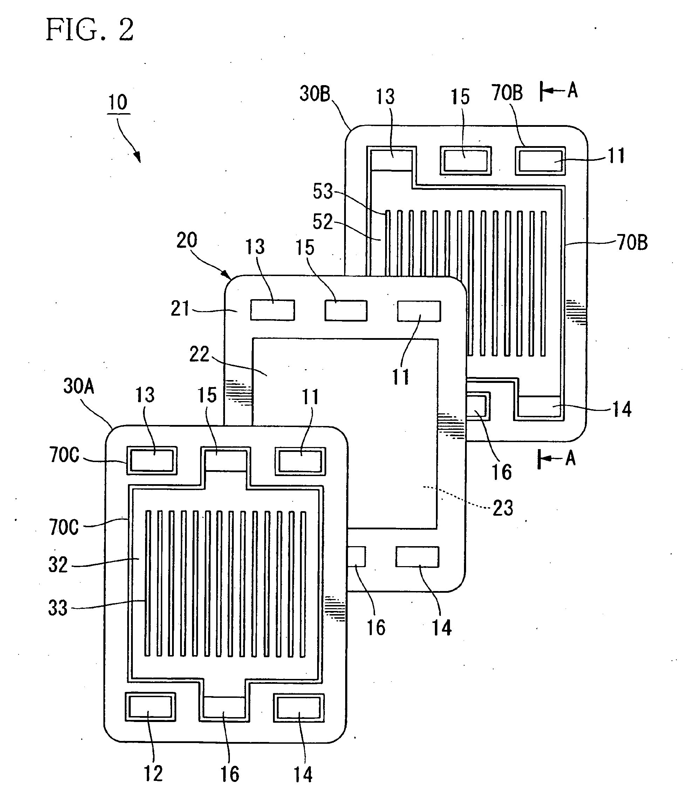

FIG. 2 is a development view showing a unit cell. The unit cell 10 forms a sandwich structure in which separators 30A and 30B are arranged on either side of a membrane electrode structure 20. To elaborate, the membrane electrode structure 20 is formed by arranging an anode electrode 22 and a cathode electrode 23 on either side of a solid polymer electrolyte membrane 21 (electrolyte membrane) made of a fluorine electrolyte material or the like, and arranging an anode side separator 30A facing the anode electrode 22, and a cathode side separator 30B facing the cathode electrode 23. Both separators 30A and 30B are made, for example, of a carbon material or the like.

In FIG. 2, at each upper right corner of the membrane electrode structure 20 and the separators 30A and 30B, a fuel gas supply port 11 is provided through which an unused fuel gas (for example hydrogen gas) flows, and at each lower left corner, the diagonally opposite position, an anode off-gas discharge port 12 is provided through which a used fuel gas (referred to as "anode off-gas" below) flows. Furthermore, at each upper left corner of the membrane electrode structure 20 and both separators 30A and 30B, an oxidizing gas supply port 13 is provided through which an unused oxidizing gas (for example air) flows, and at each lower right corner, the diagonally opposite position, a cathode off-gas discharge port 14 is provided through which a used oxidizing gas (referred to as "cathode off-gas" below) flows. In addition, at each top center of the membrane electrode structure 20 and both separators 30A and 30B, a coolant supply port 15 is provided through which unused coolant flows, and at each bottom center, the symmetrically opposite position, a coolant discharge port 16 is provided through which used coolant flows.

In the cathode side separator 30B, in the surface that faces the membrane electrode structure 20, a depression (52) which is rectangular in plan view is formed through which the oxidizing gas flows along the membrane electrode structure 20. This depression connects to the oxidizing gas supply port 13 and the cathode off-gas discharge port 14 to form an oxidizing gas flow path 52. Inside this oxidizing gas flow path 52, a plurality of parallel guide ribs 53 are provided which guide the flow of oxidizing gas from the top of the flow path to the bottom. Moreover, the opposite surface of the cathode side separator 30B from the membrane electrode structure 20 is formed as a flat surface.

Furthermore, a sealing member 70B is provided on the surface of the cathode side separator 30B which faces the membrane electrode structure 20. This sealing member 70B is formed as an integrally molded product made of silicone rubber, fluorine rubber, ethylene/propylene rubber, or butyl rubber or the like. The sealing member 70B collectively surrounds the outside of the oxidizing gas supply port 13, the oxidizing gas flow path 52, and the cathode off-gas discharge port 14, and individually surrounds the fuel gas supply port 11, the anode off-gas discharge port 12, the coolant supply port 15, and the coolant discharge port 16.

Though not shown in the figure, in the anode side separator 30A, on the surface facing the membrane electrode structure 20, a depression which is substantially rectangular in plan view is formed through which the fuel gas flows along the membrane electrode structure 20. This depression connects to the fuel gas supply port 11 and the anode off-gas discharge port 12 to form a fuel gas flow path (51). Furthermore, a sealing member (70A) is provided on the surface of the anode side separator 30A facing the membrane electrode structure 20.

On the other hand, in the anode side separator 30A, on the surface on the opposite side from the membrane electrode structure 20, a depression (32) along which the coolant flows is formed having a substantially rectangular shape in plan view. This depression connects to the coolant supply port 15 and the coolant discharge port 16 to form a coolant flow path 32. Inside this coolant flow path 32, a plurality of parallel guide ribs 33 are provided which guide the flow of coolant from the top of the flow path to the bottom. Furthermore, a sealing member 70C is formed on the opposite surface of the anode side separator 30A from the membrane electrode structure 20.

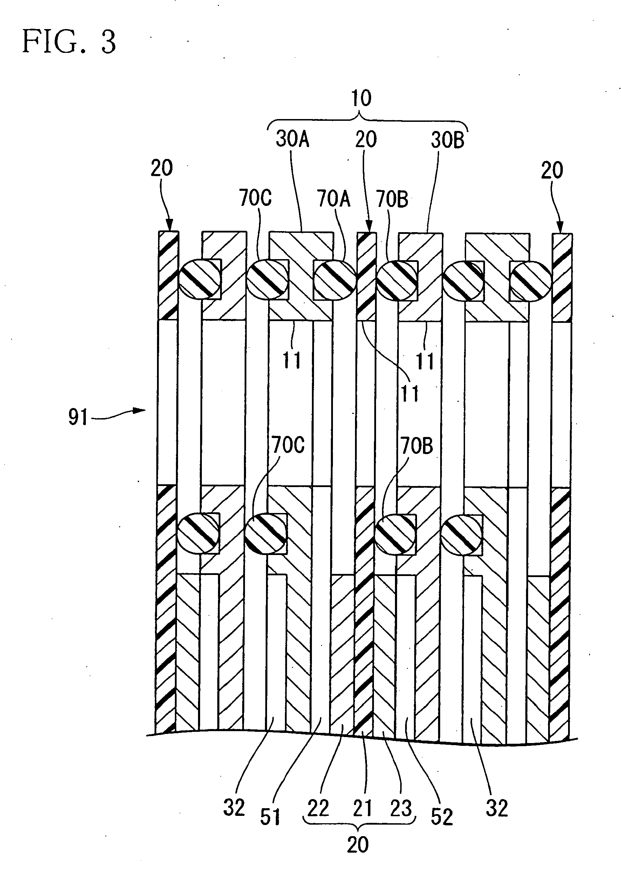

FIG. 3 is a side cross-sectional view along the line A-A in FIG. 2. As shown in FIG. 3, the cathode side separator 30B closely contacts the membrane electrode structure 20 via the sealing member 70B, and the anode side separator 30A closely contacts the membrane electrode structure 20 via the sealing member 70A. As a result, the oxidizing gas flow path 52 is formed between the cathode side separator 30B and the membrane electrode structure 20, and the fuel gas flow path 51 is formed between the anode side separator 30A and the membrane electrode structure 20.

Furthermore, the anode side separator 30A is also in close contact with the adjacent cathode side separator 30B via the sealing member 70C. As a result, the coolant flow path 32 is formed between the anode side separator 30A and the cathode side separator 30B.

Then, when hydrogen gas or the like is supplied to the fuel gas flow path 51 as the fuel gas, and oxygen-containing air or the like is supplied to the oxidizing gas flow path 52 as the oxidizing gas, the hydrogen ions produced by the catalytic reaction in the anode electrode 22 move through the solid polymer electrolyte membrane 21 to the cathode electrode 23. These hydrogen ions cause an electrochemical reaction with the oxygen in the cathode electrode 23, thereby generating electrical power. The generated electrical power is collected in the end plates 90A and 90B shown in FIG. 1 and taken out of the fuel cell system. During this electric power generation process, water is also generated. Because a portion of the generated water on the cathode electrode 23 side passes through the solid polymer electrolyte membrane 21 and disperses to the anode electrode 22 side, generated water is also present on the anode electrode 22 side.

On the other hand, the fuel gas supply ports 11 formed in the membrane electrode structure 20 and the separators 30A and 30B are connected to each other to form a fuel gas supply linkage hole 91 which passes through the membrane electrode structure 20 and the separators 30A and 30B in the stacking direction. This fuel gas supply through hole 91 connects to the fuel gas flow path 51 in each unit cell 10.

As shown in FIG. 1, one end of the fuel gas supply through hole 91 opens at a fuel gas inlet port 91A formed in the end plate 90A, while the other end of the fuel gas supply linkage hole 91 is closed off by the end plate 90B.

In the same manner, the anode off-gas discharge ports 12 formed in each unit cell 10 are connected to each other to form an anode off-gas discharge through hole 92, one end of which opens at an anode off-gas outlet port 92A formed in the end plate 90A. Furthermore, the oxidizing gas supply ports 13 are connected to each other to form an oxidizing gas supply through hole 93, one end of which opens at an oxidizing gas inlet port 93A. Furthermore, the cathode off-gas discharge ports 14 are connected to each other to form a cathode off-gas discharge through hole 94, one end of which opens at a cathode off-gas outlet port 94A. Moreover, the coolant supply ports 15 are connected to each other to form a coolant supply through hole 95, one end of which opens at a coolant inlet port 95A. Furthermore, the coolant discharge ports 16 are connected to each other to form a coolant discharge through hole 96, one end of which opens at a coolant outlet port 96A.

### (Fuel cell system)

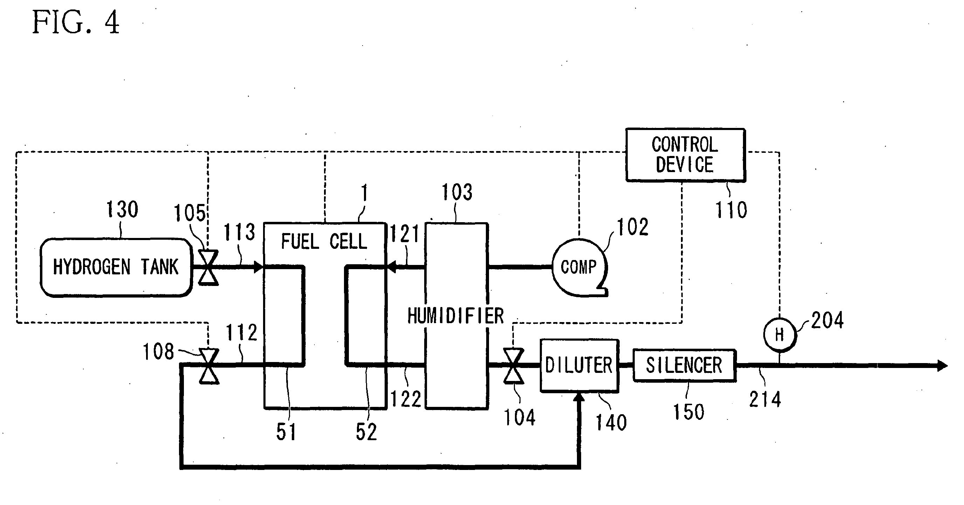

FIG. 4 is a block diagram showing an overview of the structure of the fuel cell system. The above described fuel cell stack 1 (referred to as the "fuel cell" below) generates electricity by an electrochemical reaction between a fuel gas such as hydrogen gas and an oxidizing gas such as air. The fuel gas supply through hole (the inlet side of the fuel gas flow path 51) of the fuel cell 1 connects to a fuel gas supply pipe 113, the upstream end of which is connected to a hydrogen tank 130. Furthermore, the oxidizing gas supply through hole (the inlet side of the oxidizing gas flow path 52) of the fuel cell 1 connects to an oxidizing gas supply pipe 121, the upstream end of which is connected to an air compressor 102. An anode off-gas discharge pipe 112 connects to the anode off-gas discharge through hole (the outlet side of the fuel gas flow path 51) of the fuel cell 1, and a cathode off-gas discharge pipe 122 connects to the cathode off-gas discharge through hole (the outlet side of the oxidizing gas flow path 52).

The hydrogen gas supplied from the hydrogen tank 130 to the fuel gas supply pipe 113 is decompressed in a regulator, passes through an ejector, and is humidified by an anode humidifier before being supplied to the fuel gas flow path 51 of the fuel cell 1. The anode off-gas travels through the anode off-gas discharge pipe 112 and is drawn into the ejector, combined with the hydrogen gas supplied from the hydrogen tank 130, and again supplied to the fuel cell 1 in a cyclical manner. The anode off-gas discharge pipe 112 is connected to a diluter (discharged gas processing device) 140 via an electromagnetically driven purge valve 108.

On the other hand, air is compressed by the air compressor 102, humidified in a cathode humidifier 103, and supplied to the oxidizing gas flow path 52 of the fuel cell 1. After the oxygen is used as an oxidizing agent in the power generation process, the residual air is discharged from the fuel cell 1 as cathode off-gas. The cathode off-gas discharge pipe 122 is connected to the diluter 140 via an electromagnetically driven back pressure valve 104. The diluter 140, by mixing the anode off-gas and the cathode off-gas, dilutes the anode off-gas containing unreacted hydrogen gas using the cathode off-gas.

A control device 110, according to the output required of the fuel cell 1, drives the air compressor 102 to supply a predetermined quantity of air to the fuel cell 1, and controls a cutoff valve 105 to supply a predetermined quantity of hydrogen gas from the hydrogen tank 130 to the fuel cell 1. Furthermore, the back pressure valve 104 is also controlled to adjust the pressure of the air supplied to the oxidizing gas flow path 52 according to the output required of the fuel cell 1. Furthermore, the purge valve 108 is also controlled to adjust the discharge rate of the anode off-gas.

A discharge gas pipe 214 extends from the downstream side of the diluter 140. In the discharge gas pipe 214, a silencer 150 is provided which reduces the sound associated with discharging the exhaust gas. Inside the silencer 150, a plurality of discharge expansion chambers are formed, and the silencing effect of the silencer 150 is enhanced by securing a large capacity for these expansion chambers. The cross-sectional area of the flow path in the discharge expansion chambers is larger than the cross-sectional area of the flow path in the discharge gas pipe 214. In other words, the silencer 150 which includes these discharge expansion chambers functions as an enlarged cross-section area flow path section having a larger cross-sectional area than the discharge gas pipe 214.

### (Hydrogen gas concentration sensor)

In the discharge gas pipe 214 which extends from the downstream side of the silencer 150, a hydrogen gas concentration sensor 204 is provided.

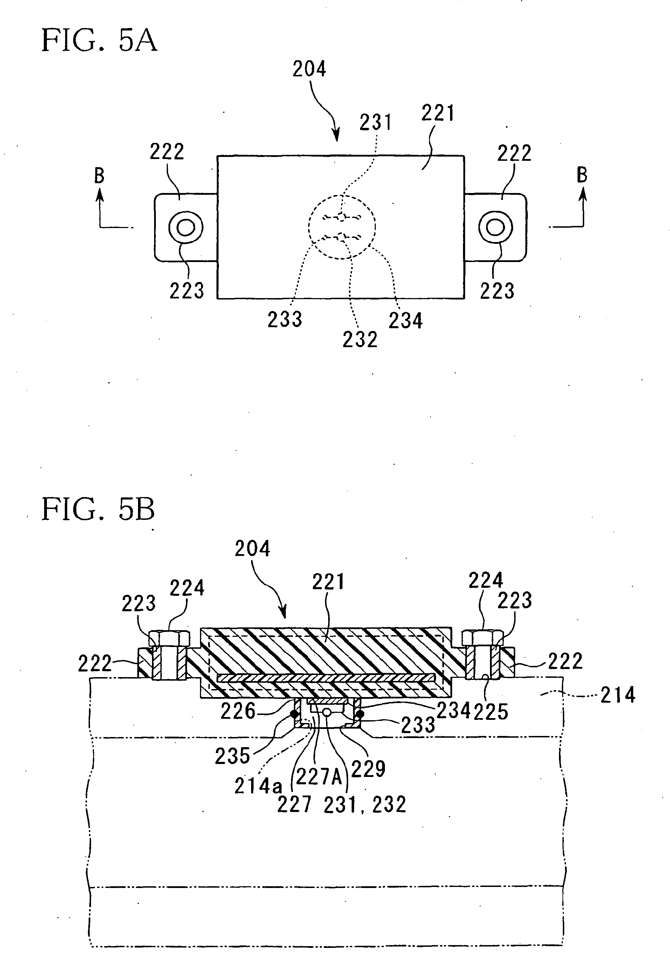

FIG. 5A and FIG. 5B are explanatory views showing the hydrogen gas concentration sensor. FIG. 5A is a plan view, and FIG. 5B is a cross-sectional view along the line B-B in FIG. 5A.

The hydrogen gas concentration sensor 204 shown in FIG. 5A is, for example, a gas catalytic combustion-type hydrogen gas concentration sensor, having a rectangular case 221. The case 221 is fastened to a mounting seat 225 provided on the discharge gas pipe 214, by inserting bolts 224 into collars 223 provided in flange sections 222.

As shown in FIG. 5B, a cylindrical section 226 is formed on the lower face of the case 221. A sealing member 235 is attached to the outer peripheral surface of the cylindrical section 226, in close contact with the inner peripheral wall of a through hole 214a of the discharge gas pipe 214 so as to provide an airtight seal. Furthermore, the inside of the cylindrical section 226 constitutes a gas detection chamber 227. A gas introducing section 229 is formed at the end of the cylindrical section 226, and this gas introducing section 229 opens at the top surface of the discharge gas pipe 214.

A base 234 is provided at the bottom face 227A of the gas detection chamber 227, and a plurality of pins 233 extend upright from this base 234.

As shown in FIG. 5A, a detecting element 231 is provided across the ends of one pair of pins 233, and a temperature compensation element 232 is provided across the ends of another pair of pins 233. These pins 233 serve to carry current to and from the detecting element 231 and the temperature compensation element 232. The detecting element 231 and the temperature compensation element 232 are disposed in parallel leaving a predetermined gap between them, and are each disposed at the same height from the base 234.

The detecting element 231 covers the surface of a coil and is formed from alumina or the like carrying a catalyst. The catalyst is a noble metal (for example platinum) or the like which is active with respect to hydrogen gas, the gas being detected. The coil is made of metal wire containing a substance such as platinum which has a high temperature coefficient of electrical resistance. In contrast, the temperature compensation element 232 is inactive with respect to the gas being detected, and is formed, for example, from alumina or the like absent a catalyst so as to cover the surface of a coil in the same manner as the detecting element 231.

The catalyst of the detecting element 231 undergoes combustion upon contact with hydrogen gas. As a result, the temperature of the detecting element 231 rises and its electrical resistivity increases. The electrical resistivity of the detecting element 231 increases according to the concentration of the hydrogen gas. In contrast, the temperature compensation element 232 does not generate heat upon contact with the hydrogen gas, and its electrical resistivity does not increase. Accordingly, a difference develops between the electrical resistivities of the detecting element 231 and the temperature compensation element 232. By using this difference between electrical resistivities, the hydrogen concentration can be detected.

Moreover, when a concentration of hydrogen gas that exceeds a preset threshold value is detected by this hydrogen gas concentration sensor 204, action is taken by the control device 110 such as shutting off the supply of fuel gas.

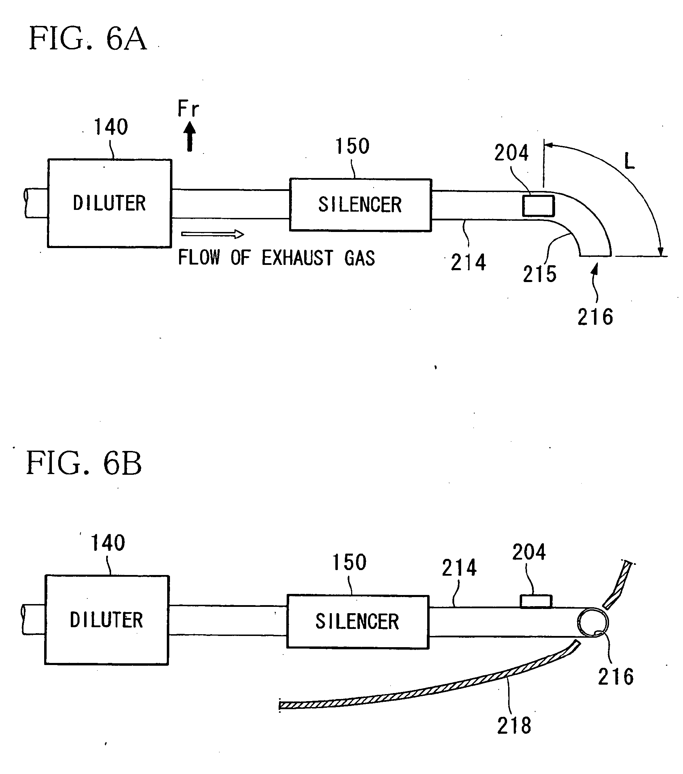

FIG. 6A and FIG. 6B are layout drawings showing the hydrogen gas concentration sensor. FIG. 6A is a plan view (viewed from above the vehicle), and FIG. 6B is a rear view (viewed from behind the vehicle). As shown in FIG. 6A and FIG. 6B, the hydrogen gas concentration sensor 204 is installed in the discharge gas pipe 214 on the downstream side of the silencer 150. In other words, the silencer 150 is provided between the diluter 140 and the hydrogen gas concentration sensor 204. The silencer 150 functions as an enlarged cross-section area flow path section which has a larger cross-sectional area than the discharge gas pipe 214.

In the standby state after the ignition switch is switched off, the area of contact with the exhaust gas is increased in the enlarged cross-section area flow path section, resulting in a drop in temperature. Accordingly, the water contained in the exhaust gas forms condensation on the inside wall of the enlarged cross-section area flow path section. As a result, the humidity of the exhaust gas discharged from the enlarged cross-section area flow path section is reduced, and the formation of condensation on the downstream side of the enlarged cross-section area flow path section can be suppressed. Because the hydrogen gas concentration sensor 204 is disposed on the downstream side of the enlarged cross-section area flow path section, the adhesion of condensation to the hydrogen gas concentration sensor 204 can be suppressed. Additionally, the adhesion of water to such components as the pins 233 which carry current to and from the detecting element 231 and the temperature compensation element 232 can be reduced, and the incidence of corrosion or shorting can be prevented.

Furthermore, in the present embodiment, the silencer 150 is used as the enlarged cross-section area flow path section. As a result, because there is no need to provide an additional device to function as an enlarged cross-section area flow path section for the purpose of preventing condensation in the hydrogen gas concentration sensor, increases to manufacturing costs can be suppressed. Furthermore, the sound associated with discharging the exhaust gas can also be reduced, improving the marketability of the product.

If the hydrogen gas concentration sensor 204 is installed on the upstream side of the silencer 150, the bulk of the silencer becomes an impediment that creates difficulty ensuring a flow of outside air with low humidity, and lengthens the time required to lower the humidity of the environment surrounding the hydrogen gas concentration sensor 204. In contrast, by installing the hydrogen gas concentration sensor 204 on the downstream side of the silencer 150, the humidity of the environment surrounding the hydrogen gas concentration sensor 204 can be lowered in a short period of time.

Incidentally, the discharge gas pipe 214 is provided so as to extend along the width direction of the vehicle, a bend section 215 is provided by curving the downstream end thereof towards the rear of the vehicle, and a discharge port 216 for exhaust gas is provided at the downstream end of the bend section 215. The hydrogen gas concentration sensor 204 is installed in the vicinity of the upstream end of the bend section 215.

Because the speed of the exhaust gas changes when the exhaust gas hits the bend section 215, by disposing the hydrogen gas concentration sensor 204 on the upstream end of the bend section 215, there is greater opportunity for the exhaust gas to contact the hydrogen gas concentration sensor 204. Accordingly, the hydrogen gas concentration sensor 204 can reliably detect the hydrogen gas. Furthermore, if a foreign substance infiltrates the discharge gas pipe 214 through the discharge port 216, the progress of the foreign substance is halted at the bend section 215, and the foreign substance can be prevented from reaching the hydrogen gas concentration sensor 204. Accordingly, the hydrogen gas concentration sensor 204 can be protected.

The distance L from the discharge port 216 of the discharge gas pipe 214 to the hydrogen gas concentration sensor 204 is preferably 20 cm or less, and more preferably between 5 and 10 cm.

If the hydrogen gas concentration sensor 204 is installed on the downstream side of the exhaust gas pipe (at a position near the discharge port 216), a flow of outside air having low humidity can be ensured easily, and the humidity of the environment surrounding the hydrogen gas concentration sensor 204 can be lowered in a short period of time. Conversely, if the hydrogen gas concentration sensor 204 is installed on the upstream side of the exhaust gas pipe (at a position distant from the discharge port 216), the concentration of hydrogen gas in the exhaust gas can be measured accurately without being affected by external factors (such as the flow of ambient air). By keeping the distance L from the discharge port 216 to the hydrogen gas concentration sensor 204 within the range mentioned above, a favorable balance between the two can be obtained.

The hydrogen gas concentration sensor 204 is installed on the upper part of the discharge gas pipe 214. In other words, the gas introducing section 229 of the hydrogen gas concentration sensor 204 opens at the top surface of the discharge gas pipe 214.

Because the condensation produced in the discharge gas pipe 214 flows along the lower part of the discharge gas pipe 214, by employing the construction described above, the adhesion of water to the hydrogen gas concentration sensor can be prevented. Furthermore, because the relatively light hydrogen gas flows along the upper part of the discharge gas pipe 214, the hydrogen gas concentration sensor 204 can reliably detect the hydrogen gas.

At the bottom of the discharge gas pipe 214, an under cover 218 composed of a steel sheet or the like is provided. The under cover 218 is formed so as to cover the discharge gas pipe 214 and the hydrogen gas concentration sensor 204, leaving only the discharge port 216 of the discharge gas pipe 214 exposed.

By using this under cover 218 to prevent exposure of the hydrogen gas concentration sensor 204, the hydrogen gas concentration sensor 204 can be protected from external factors such as stones thrown up by the vehicle, and damage to the hydrogen gas concentration sensor 204 can be prevented.

The present invention is not limited to the embodiment described above.

The shapes of the reaction gas flow path and coolant flow path in the fuel cell are not limited to the embodiment described above, and any shape may be used.

Moreover, in the above embodiment, the diluter 140 is employed for diluting the anode off-gas containing unreacted hydrogen gas using the cathode off-gas; however, a catalytic combustor may be used thereinstead.

This fuel cell system is provided with: a fuel cell which is supplied with cathode gas and anode gas and generates electrical power; a discharged gas processing device which mixes and dilutes cathode off-gas and anode off-gas discharged from the fuel cell; a discharge gas pipe through which exhaust gas discharged from the discharged gas processing device flows; a specific gas concentration sensor disposed in the discharge gas pipe, which measures a concentration of a specific gas in the exhaust gas; and an enlarged cross-section area flow path section provided between the discharged gas processing device and the specific gas concentration sensor, and having a flow path cross-section area that is larger than that of the discharge gas pipe said enlarged cross-section area being a silencer which reduces a sound associated with discharging said exhaust gas.

## Claims

1. A fuel cell system comprising:
a fuel cell (10) which is supplied with a cathode gas and an anode gas and generates electrical power;
a discharged gas processing device (140) which mixes and dilutes a cathode off-gas and an anode off-gas discharged from the fuel cell (10);
a discharge gas pipe (214) through which an exhaust gas discharged from the discharged gas processing device (140) flows;
a specific gas concentration sensor (204) disposed in the discharge gas pipe (214), which measures a concentration of a specific gas in said exhaust gas; and
an enlarged cross-section (150) area flow path section provided between said discharged gas processing device (140) and said specific gas concentration sensor (204), and having a flow path cross-section area that is larger than that of said discharge gas pipe (214),
wherein the specific gas concentration sensor (204) is disposed on the downstream side of the enlarged cross-section area flow path section (150),
**characterized in that** said enlarged cross-section area flow path section is a silencer (150) which reduces a sound associated with discharging said exhaust gas.

2. The fuel cell system according to claim 1, wherein said silencer (150) has a plurality of expansion chambers.

3. The fuel cell system according to claim 1, wherein
a bend (215) section is formed in said discharge gas pipe, and said specific gas concentration sensor (204) is disposed on an upstream side of said bend section (215).

4. The fuel cell system according to claim 1, wherein said specific gas concentration sensor (204) is disposed in an upper part of said discharge gas pipe (214).

5. The fuel cell system according to claim 1, wherein at a bottom of said discharge gas pipe (214), there is provided an under cover (218) which exposes only a discharge port (216) of the discharge gas pipe (214).

6. The fuel cell system according to claim 1, wherein said discharged gas processing device is a diluter (140).

## Patentansprüche

1. Brennstoffzellensystem umfassend:
eine Brennstoffzelle (10), die mit Kathodengas und Anodengas versorgt wird und elektrische Energie erzeugt;
eine Abgasbearbeitungsvorrichtung (140), die von der Brennstoffzelle (10) abgegebenes Kathodenabgas und Anodenabgas vermischt und verdünnt;
ein Abgasrohr (214), durch das von der Abgasbearbeitungsvorrichtung (140) bearbeitetes Abgas fließt;
ein Spezifisches-Gas-Konzentrationssensor (204), der in dem Abgasrohr (214) angeordnet ist und eine Konzentration eines spezifischen Gases in dem Abgas misst; und
ein Strömungswegabschnitt mit vergrößerter Querschnittsfläche (150) zwischen der Abgasbearbeitungsvorrichtung (140) und dem Spezifisches-Gas-Konzentrationssensor (204) vorgesehen ist und eine Strömungswegquerschnittsfläche hat, die größer ist als jene des Abgasrohrs (214),
worin der Spezifisches-Gas-Konzentrationssensor (204) an der stromabwärtigen Seite des Strömungswegabschnitts mit vergrößerter Querschnittsfläche (150) angeordnet ist,
**dadurch gekennzeichnet, dass** der Strömungswegabschnitt mit vergrößerter Querschnittsfläche ein Schalldämpfer (150) ist, der ein der Abgabe des Abgases zugeordnetes Geräusch reduziert.

2. Das Brennstoffzellensystem nach Anspruch 1, worin der Schalldämpfer (150) eine Mehrzahl von Expansionskammern aufweist.

3. Das Brennstoffzellensystem nach Anspruch 1, worin ein Biegungsabschnitt (215) in dem Abgasrohr ausgebildet ist und der Spezifisches-Gas-Konzentrationssensor (204) an einer stromaufwärtigen Seite des Biegungsabschnitts (215) angeordnet ist.

4. Das Brennstoffzellensystem nach Anspruch 1, worin der Spezifisches-Gas-Konzentrationssensor (204) in einem oberen Teil des Abgasrohrs (214) angeordnet ist.

5. Das Brennstoffzellensystem nach Anspruch 1, worin an einer Unterseite des Abgasrohrs (214) eine untere Abdeckung (218) vorgesehen ist, die nur eine Auslassöffnung (216) des Abgasrohrs (214) freilässt.

6. Das Brennstoffzellensystem nach Anspruch 1, worin die Abgasbearbeitungsvorrichtung ein Verdünner (140) ist.

## Revendications

1. Système de pile à combustible comprenant :
une pile à combustible (10) qui est alimentée avec un gaz cathodique et un gaz anodique et génère du courant électrique ;
un dispositif de traitement de gaz déchargé (140) qui mélange et dilue un gaz de dégagement cathodique et
un gaz de dégagement anodique déchargés par la pile à combustible (10) ;
un tuyau de gaz de décharge (214) à travers lequel un gaz d'échappement déchargé du dispositif de traitement de gaz déchargé (140) s'écoule ;
un capteur de concentration de gaz spécifique (204) disposé dans le tuyau de gaz de décharge (214), qui mesure une concentration d'un gaz spécifique dans ledit gaz d'échappement ; et
une section de voie d'écoulement à surface transversale élargie (150) agencée entre ledit dispositif de traitement de gaz déchargé (140) et
ledit capteur de concentration de gaz spécifique (204), et ayant une surface transversale de voie d'écoulement qui est supérieure à celle dudit tuyau de gaz de décharge (214),
dans lequel le capteur de concentration de gaz spécifique (204) est disposé du côté aval de ladite section de voie d'écoulement à surface transversale élargie (150) ;
**caractérisé en ce que** ladite section de voie d'écoulement à surface transversale élargie est un silencieux (150) qui réduit un son associé au déchargement dudit gaz d'échappement.

2. Système de pile à combustible selon la revendication 1, dans lequel ledit silencieux (150) a une pluralité de chambres d'expansion.

3. Système de pile à combustible selon la revendication 1, dans lequel :
une section courbe (215) est formée dans ledit tuyau de gaz de décharge, et
ledit capteur de concentration de gaz spécifique (204) est disposé d'un côté en amont de ladite section courbe (215).

4. Système de pile à combustible selon la revendication 1, dans lequel ledit capteur de concentration de gaz spécifique (204) est disposé dans une partie supérieure dudit tuyau de gaz de décharge (214).

5. Système de pile à combustible selon la revendication 1, dans lequel, au niveau d'un fond dudit tuyau de gaz de décharge (214), on prévoit un sous-couvercle (218) qui expose uniquement un orifice de décharge (216) du tuyau de gaz de décharge (214).

6. Système de pile à combustible selon la revendication 1, dans lequel ledit dispositif de traitement de gaz déchargé est un dilueur (140).
